# EUROPEAN PATENT APPLICATION

(11) **EP 1 921 239 A1**
(43) Date of publication of application: **14.05.2008**
(21) Application number: 07119941.8
(22) Date of filing: 05.11.2007
(51) Int. Cl.: E05D 5/02, F16B 13/14

(54) **Hinging element for a hinge for frames**

(30) Priority: 08.11.2006 IT UD20060233
(71) Applicant: OTLAV SpA, 31025 Santa Lucia di Piave (TV) (IT)
(72) Inventor: Spinazzè, Guido, 31010, Mareno di Piave (TV) (IT)
(74) Representative: Petraz, Gilberto Luigi

(57) **Abstract**

Hinging element (10) for frames comprising a base body (12) and a holed shank (14), protruding from the base body (12). The shank (14) is able to be fixed to a wall (24) by means of a fixing resin (28). The shank (14) has a substantially polygonal cross section.

## Description

### FIELD OF THE INVENTION

The present invention relates to a hinging element for a hinge for frames, for example window-frames, door-frames or shutters. The hinging element comprises a holed shank able to be inserted into a hole made on a wall and able to be fixed by means of a fixing resin.

### BACKGROUND OF THE INVENTION

In the field of door and window frames, hinging elements are known, consisting of a male body and a tubular cylindrical shank fixed to the male body and provided with apertures made on its surface. Hinging elements of this type are known from CH-A-691 819 and from EP-A-1 382 789.

Each known hinging element is normally fixed to a wall, making a hole thereon, inside which the relative shank is inserted.

The shanks normally have a determined diameter, for example 18 mm, and require a hole almost double in diameter, for example at least 30 mm, so as to allow the correct positioning of the known hinging element also with respect to the other hinging elements of the frame.

A fixing resin is then injected into the shank, so that it exits, through the apertures, towards the inside of the wall.

The resin, after hardening around the shank, defines a seating shaped like the shank, that is, cylindrical. This entails that the shanks of known hinging elements can rotate with respect to the seating, not guaranteeing an adequate fixing of the known hinging elements to the wall.

In order to avoid this, a cylindrical shank has also been proposed, with two pairs of transverse narrow portions made along its cylindrical wall, which deform it longitudinally. This last solution, however, causes higher production costs.

Furthermore, given the internally concave cylindrical shape, the shanks of known hinging elements have low resistance to torsion and flexion.

A further disadvantage of known hinging elements is that, in order to stop the resin from leaking out of the end of the shank inserted inside the wall, it is necessary to use a closing top.

One purpose of the present invention is to achieve a hinging element for frames provided with a shank which has high characteristics of resistance to flexion and torsion and that guarantees a good coupling with the seating defined by the resin inside the wall substantially without the possibility of rotating with respect to said seating.

Another purpose of the present invention is to achieve a hinging element that requires a hole in the wall of smaller size than the one for known hinging elements, while still guaranteeing at least the same mechanical characteristics.

A further purpose of the present invention is to achieve a hinging element, in which the fixing of the shank to the male body is simplified and more resistant.

A further purpose of the present invention is to achieve a hinging element that does not require additional elements, for example to avoid the leaking of the resin from the end, such as the top.

The applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a hinging element for frames according to the present invention comprises a base body and a holed shank protruding from the base body, in which the holed shank is fixed to a wall by means of a fixing resin.

According to a characteristic of the present invention, the holed shank has a substantially polygonal cross section, advantageously square.

According to the present invention, the substantially polygonal cross section of the shank gives the hinging element high characteristics of resistance to flexion and torsion. Furthermore, the fixing resin defines, in cooperation with the external surface of the shank, a seating shaped substantially like the shank itself, that is, it has a substantially polygonal cross section. This guarantees an ideal coupling between the shank and said seating substantially without any possibility of the shank being able to rotate with respect to the seating.

Furthermore, the shank of the hinging element according to the present invention, at least given the same mechanical characteristics as the shanks of known hinging elements, can have smaller sizes, thus allowing to make holes on the wall with a smaller diameter than that needed for the shanks of known hinging elements, while guaranteeing the possibility of correct positioning.

According to the present invention, if the shank of the hinging element is fixed to the base body through welding, this last operation is simplified and is more resistant, as the welding is performed on straight surfaces, not curved.

According to an advantageous solution of the present invention, in correspondence with a first end of the shank, opposite a second end fixed to the base body, the lateral walls of the shank are at least partly pressed together. In this way, the leaking of resin from the first end is reduced or prevented, without using additional elements such as a top.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a longitudinal section of a hinging element in accordance with the present invention mounted to a wall;
- fig. 2 is a section from II to II of fig. 1;
- fig. 3 is a lateral view of the hinging element in fig. 1;
- fig. 4 is a plane view of the hinging element in fig. 1.

### DETAILED DESCRIPTION OF A PREFERENTIAL FORM OF EMBODIMENT

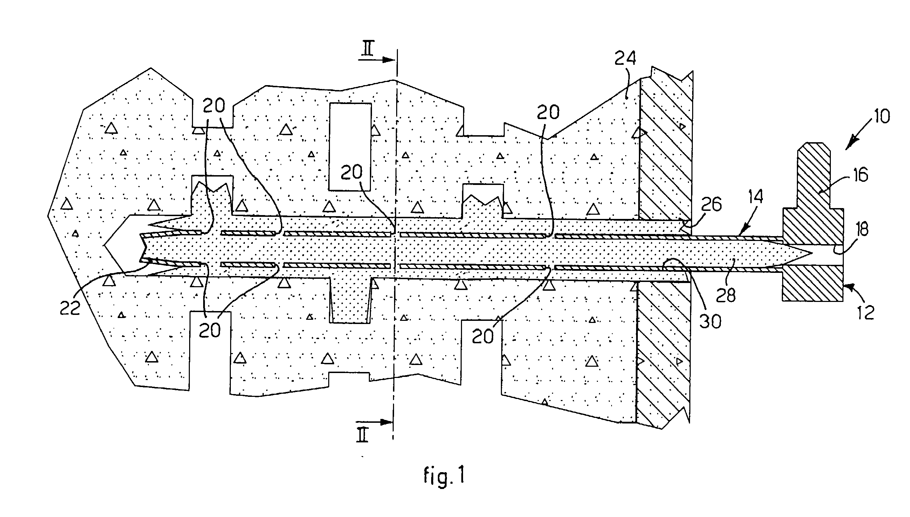

With reference to fig. 1, a hinging element 10 according to the present invention is used to hinge a frame, not shown in the drawings, and comprises a male body 12 and a shank 14 (figs. 1 to 4).

The male body 12 comprises a pin 16, to which a female element can be hinged, not shown and of any known type, and a through seating 18, substantially orthogonal to the pin 16.

The shank 14, which for example is made of metal, is tubular and has a substantially square cross section, thus guaranteeing a high resistance to torsion and flexion.

It comes within the scope of protection of the present invention that the shank 14 has a generally polygonal cross section, for example triangular or pentagonal.

To give an example, the shank 14 has a side of about 15 mm, a thickness of about 1:5 mm and a length of about 300 mm.

Furthermore, apertures 20 are made on the lateral walls of the shank 14, the function of which will be described hereafter.

The shank 14 is welded to the male body 12 so as to be coaxial with the through seating 18. The welding operation is facilitated as it is performed on straight surfaces, not curved as in known hinging elements.

Furthermore, the straight surfaces of the shank 14 also facilitate the plastering of the hole 26 into which the shank 14 is inserted.

In correspondence with the end of the shank 14, opposite the end welded to the male body 12, the lateral walls of the shank 14 are at least partly pressed together, in order to define a pressed portion 22.

We shall now describe the steps for mounting a hinging element 10 according to the present invention to a wall 24 (fig. 1).

The hinging element 10 can be installed to the wall 24, making a hole 26 thereon, for example with a diameter of about 25 mm.

The shank 12 is first inserted into the hole 26 and, through the through seating 18 of the male body 12, a resin 28 is injected, which exits towards the hole 26 into the wall 24 through said apertures 20. The pressed portion 22 reduces or prevents the resin 28 from leaking from the end.

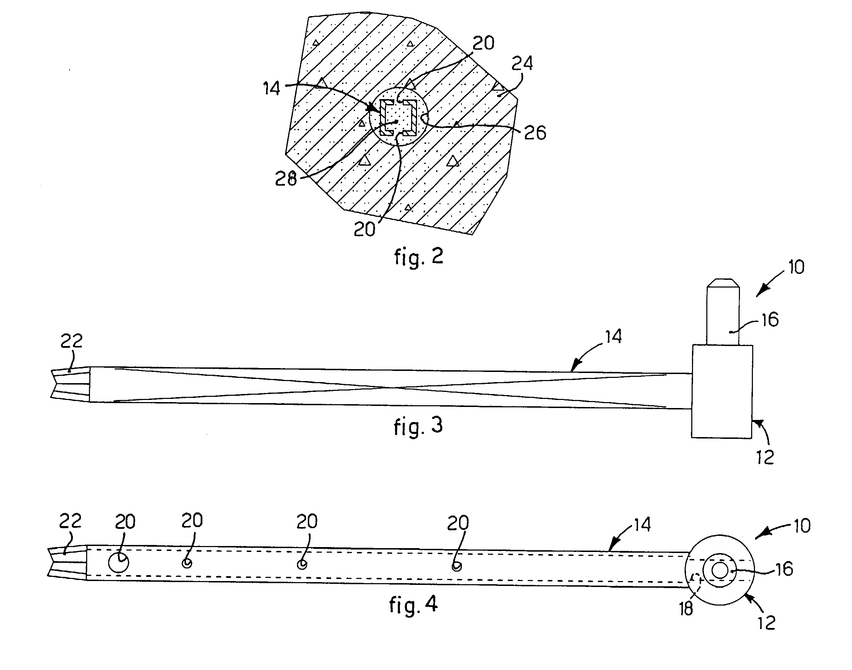

The resin 28 is disposed around the shank 14 and, after hardening, defines a seating 30 which is shaped substantially like the shank 14, that is, substantially square (fig. 2).

This guarantees an ideal coupling between the shank 14 and said seating 30 substantially without any possibility of the shank 14 being able to rotate with respect to said seating 30.

According to a variant of the present invention, the hinging element 10 also comprises a bar, also flexible, for example made of plastic material, usable to further extrude the resin 28 through the apertures 20.

According to another variant of the present invention, the hinging element 10 also comprises a metal bar reinforcing the shank 14, which can also function as an external top to close the through seating 18.

It is clear that modifications and/or additions of parts may be made to the hinging element 10 as described heretofore, without departing from the scope of the present invention.

It is also clear that, although the present invention has been described with reference to some specific examples, a person of skill in the art shall certainly be able to achieve many other equivalent forms of hinging elements for casings with holed shank for inserting a fixing resin, having the characteristics as set forth in the claims and hence all coming within the scope of protection defined thereby.

## Claims

1. Hinging element for frames comprising a base body (12) and a holed shank, protruding from said base body (12), in which said shank is able to be fixed to a wall (24) by means of a fixing resin (28), **characterized in that** said shank (14) has a substantially polygonal cross section.

2. Hinging element as in claim 1, **characterized in that** said shank (14) has a substantially square cross section.

3. Hinging element as in claim 1 or 2, **characterized in that** in correspondence with a first end of said shank (14), opposite a second end associated with said base body (12), the lateral walls of the shank (14) are at least partly pressed together so as to define a pressed portion (22).

4. Hinging element as in claim 3, **characterized in that** said pressed portion (22) is able to reduce or prevent the leakage of said fixing resin (28) from said first end.

5. Hinging element as in any claim hereinbefore, **characterized in that** said shank (14) comprises a plurality of through apertures (20), through which said fixing resin (28) is able to exit.

6. Hinging element as in any claim hereinbefore, **characterized in that** said shank (14) is tubular.

7. Hinging element as in any claim hereinbefore, **characterized in that** said shank (14) is made of metal.

8. Hinging element as in any claim hereinbefore, **characterized in that** said shank (14) has a length of about 300 mm.

9. Hinging element as in any claim hereinbefore, **characterized in that** said shank (14) has a thickness of about 1.5 mm.

10. Hinging element as in any claim hereinbefore, **characterized in that** said shank (14) has a side of about 15 mm.

11. Hinging element as in any claim hereinbefore, **characterized in that** it also comprises a bar, able to be used to further extrude said fixing resin.

12. Hinging element as in any claim from 1 to 10, **characterized in that** it also comprises a metal bar to reinforce the shank (14).
